(19) Europäisches Patentamt
European Patent Office
Office européen des brevets

(11) Veröffentlichungsnummer : **0 082 397**
**B1**

(12) # EUROPÄISCHE PATENTSCHRIFT

(45) Veröffentlichungstag der Patentschrift : **05.03.86**

(51) Int. Cl.⁴ : **C 08 G 18/18**

(21) Anmeldenummer : **82111290.1**

(22) Anmeldetag : **06.12.82**

(54) **Verfahren zur Herstellung von Polyurethan-polyisocyanurat-schaumstoffen.**

(30) Priorität : **23.12.81 DE 3151041**

(43) Veröffentlichungstag der Anmeldung : **29.06.83 Patentblatt 83/26**

(45) Bekanntmachung des Hinweises auf die Patenterteilung : **05.03.86 Patentblatt 86/10**

(84) Benannte Vertragsstaaten : **BE DE FR GB IT NL**

(56) Entgegenhaltungen :
**DE-A- 2 631 733**
**DE-B- 2 527 242**

(73) Patentinhaber : **BASF Aktiengesellschaft**
**Carl-Bosch-Strasse 38**
**D-6700 Ludwigshafen (DE)**

(72) Erfinder : **Horacek, Heinrich, Dr.**
**Mozartstrasse 62**
**D-6710 Frankenthal (DE)**
Erfinder : **Gehm, Robert, Dr.**
**Mannheimer Strasse 45**
**D-6703 Limburgerhof (DE)**
Erfinder : **Frank, Wolfram, Dr.**
**Bergstrasse 162**
**D-6900 Heidelberg (DE)**
Erfinder : **Marx, Matthias, Dr.**
**Seebacher Strasse 49**
**D-6702 Bad Duerkheim (DE)**

EP 0 082 397 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung von gegebenenfalls Urethangruppen enthaltenden Polyisocyanuratschaumstoffen wird in zahlreichen Literaturveröffentlichungen und Patentschriften beschrieben. Beispielhaft genannt seien die Publikationen in J. Cell. Plastics, Januar 1965, Seiten 85 bis 90, J. Cell. Plastics, Juli 1968, Seiten 248 bis 260, Kunststoffe 62 (1972), Seiten 731 bis 732 sowie die GB-A-1 155 768.

Zur Herstellung von Urethangruppen enthaltenden Polyisocyanuratschaumstoffen können organische Polyisocyanate in Gegenwart von Hilfsmitteln und Katalysatoren cyclisiert und/oder polymerisiert und danach die erhaltenen isocyanatgruppenhaltigen Polyisocyanurate und/oder Polymerisate mit Polyolen umgesetzt werden. Zweckmäßigerweise wird jedoch die Tri- bzw. Polymerisation der Polyisocyanate und die Polyaddition der Polyole an die Polyisocyanate oder Isocyanatgruppen enthaltende Polyisocyanurate gleichzeitig durchgeführt.

Geeignete Katalysatoren für die Cyclisierung und Polymerisation der Polyisocyanate sind beispielsweise starke Basen, wie quaternäre Ammoniumhydroxide, beispielsweise Benzyltrimethylammoniumhydroxid ; Alkalimetallhydroxide, beispielsweise Natrium- oder Kaliumhydroxid ; Alkalimetallalkoxide, beispielsweise Natriummethylat und Kaliumisopropylat ; Trialkylphosphine, beispielsweise Triethylphosphin ; Alkylaminoalkylphenole, beispielsweise 2,4,6-Tris-(dimethylaminomethyl)-phenol ; 3- und-/oder 4-substituierte Pyridine, beispielsweise 3- oder 4-Methylpyridin ; metallorganische Salze, beispielsweise Tetrakis-(hydroxyethyl)-natriumborat ; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natrium-pikrat und Phthalimid-kalium. Verwendet werden ferner die stark basischen, N,N',N"-Tris-(dialkylaminoalkyl)-s-hexahydrotriazine, beispielsweise das N,N',N"-Tris-(dimethylaminopropyl)-s-hexahydrotriazin, gegebenenfalls in Kombination mit aliphatischen niedermolekularen Mono- und/oder Dicarbonsäuren, beispielsweise Essigsäure und/oder Adipinsäure oder aromatischen Carbonsäuren, wie Benzoesäure.

Neben den genannten Cyclisierungs- und Polymerisationskatalysatoren werden üblicherweise zusätzlich Katalysatoren eingesetzt, die die Additionsreaktion zwischen den Polyisocyanaten und Polyolen beschleunigen. Als sogenannte Polyurethankatalysatoren kommen beispielsweise in Betracht tertiäre Amine, wie Dimethylbenzylamin, N,N,N',N'-Tetramethyldiamino-ethylether, Bis-(dimethylaminopropyl)-harnstoff, N-Methyl- bzw. N-Ethylmorpholin, Dimethylpiperazin, 1,2-Dimethylimidazol, 1-Azabicyclo-(3,3,0)-octan und vorzugsweise Triethylendiamin, Metallsalze, wie Zinndioctoat, Bleioctoat, Zinndiethylhexoat und vorzugsweise Zinn-(II)-salze und Dibutylzinndilaurat sowie insbesondere Mischungen aus tert. Aminen und organischen Zinnsalzen.

Als hochwirksame Katalysatoren für Additions- und/oder Polymerisationsreaktionen von organischen Isocyanaten zur Herstellung von Urethan- bzw. Isocyanuratgruppen aufweisenden Produkten, wie z. B. Polyurethanen und Polyisocyanuraten, werden in der DE-A 26 31 733 (US-A-4 040 992) quartäre Hydroxyalkylammoniumverbindungen beschrieben.

Die genannten quartären Hydroxyalkylammoniumverbindungen weisen jedoch ebenso wie Mischungen aus Polyisocyanurat- und Polyurethankatalysatoren den Nachteil auf, daß sie die sogenannte PIR-Ruckreaktion zeigen. Unter PIR-Ruckreaktion hat in der Literatur (z. B. G. F. Baumann und W. Dietrich, J. of Cell. Plast. May/June (1981) 144 und J. Bechara, J. of Cell. Plast. March/April (1979) 102) ein Schaumverhalten Eingang gefunden, bei dem entsprechend Figur 1, die Schäumungsgeschwindigkeitskurve A von Schaumstoff-Formulierungen mit einem NCO : OH-Gruppenverhältnis größer als 2 während der Schaumstoffbildung zwei Geschwindigkeitsmaxima zeigt oder die Kurve B des spezifischen Volumens [$cm^3/g$] in Abhängigkeit von der Zeit [Minuten] zwei Wendepunkte aufweist. In der Schäumungsgeschwindigkeitskurve A wird das erste Geschwindigkeitsmaximum der Urethanbildung und das zweite Geschwindigkeitsmaximum der Isocyanuratbildung zugeordnet. Nachteilig an einer solchen Verfahrensweise ist, daß zunächst die Polyurethanreaktion und erst danach die Polyisocyanuratreaktion beschleunigt wird, so daß inhomogen aufgebaute Schaumkörper erhalten werden.

Die Aufgabe der vorliegenden Erfindung bestand darin Katalysatoren zu entwickeln, die den Reaktionsablauf und damit die Polyurethan- und Polyisocyanuratbildung harmonisieren.

Diese Aufgabe konnte überraschenderweise gelöst werden, durch die Verwendung von ausgewählten Ammoniumdiaminsalzen als Katalysatoren.

Gegenstand der Erfindung ist somit ein Verfahren zur Vereinheitlichung der Reaktionsgeschwindigkeit für die Bildung von Urethan- und Isocyanuratgruppen bei der Herstellung von Polyurethan-polyisocyanurat-schaumstoffen durch Umsetzung von organischen Polyisocyanaten mit Polyolen in Gegenwart von Katalysatoren, Treibmitteln und gegebenenfalls Vernetzungsmitteln, Hilfs- und Zusatzstoffen, das dadurch gekennzeichnet ist, daß man als Katalysatoren Salze von Ammoniumdiaminen der Formel

$$[CH_3 - \overset{CH_3}{\underset{CH_2CH(OH)CH_3}{\overset{|}{\underset{|}{N^+}}}} - (CH_2)_n - \overset{CH_3}{\overset{|}{N}} - (CH_2)_m - \overset{CH_3}{\overset{|}{N}} - CH_3]\ RCOO^-$$

verwendet, in der bedeuten :

R ein Wasserstoffatom oder einen gerad- oder verzweigtkettigen Alkylrest mit 1 bis 19 Kohlenstoffatomen und

n und m ganze Zahlen von 2 bis 10, die gleich oder verschieden sein können.

In Gegenwart der erfindungsgemäß verwendbaren Ammoniumdiaminsalze wird die Polyurethan- und Polyisocyanuratbildung gleichzeitig katalysiert. Die Schaumgeschwindigkeitskurve A (Figur 2) zeigt daher nur noch ein Geschwindigkeitsmaximum und die Kurve B, die die Abhängigkeit des spezifischen Volumens von der Zeit beschreibt, einen Wendepunkt. Verteilhaft ist ferner, daß die Reaktionsgeschwindigkeit im Vergleich zu Katalysatoren gemäß DE-A 26 31 733 vermindert und dadurch die Verarbeitungseigenschaften der Polyurethan-polyisocyanurat-schaumstoffsysteme verbessert werden.

Die erfindungsgemäß verwendbaren Ammoniumdiaminsalze werden hergestellt durch Umsetzung von einem Mol eines permethylierten Dialkylentriamins mit einem Mol Propylenoxid und einem Mol einer Carbonsäure mit 1 bis 20 Kohlenstoffatomen, vorzugsweise lösungsmittelfrei oder in Gegenwart eines Lösungsmittels, wie z. B. niedermolekularen, verzweigten Polyolen mit Hydroxylzahlen von 100 bis 800, vorzugsweise 250 bis 500 und/oder Glykolen, insbesondere Dipropylenglykol, bei Reaktionstemperaturen von 15 bis 90 °C, vorzugsweise von 25 bis 60 °C und Drücken von 1 bis 7 bar, vorzugsweise von 2 bis 3,5 bar. Die Reaktionszeiten betragen in Abhängigkeit von den Aufbaukomponenten, Reaktionsparametern und gegebenenfalls dem Lösungsmittel 1 bis 15 Stunden, vorzugsweise 2 bis 6 Stunden.

Geeignete permethylierte Dialkylentriamine besitzen die Formel $(CH_3)_2N{-}(CH_2)_n{-}N(CH_3){-}(CH_2)_m{-}N(CH_3)_2$, in der n und m gleich oder verschieden sind und eine ganze Zahl von 2 bis 10, vorzugsweise 2 bis 6 bedeuten. Im einzelnen seien beispielhaft genannt: Pentamethyl-diethylentriamin, -dipropylentriamin, -dibutylentriamin, -dipentamethylentriamin, -dihexamethylentriamin, -dioctamethylentriamin, -didecamethylentriamin, -ethylenpropylentriamin, -ethylenbutylentriamin, -ethylenhexamethylentriamin und -butylenhexamethylentriamin, wobei die technisch gut zugänglichen symmetrischen Pentamethyl-dialkylentriamine bevorzugt sind.

Besonders bewährt haben sich und daher vorzugsweise verwendet werden als Ammoniumdiamine 2-Hydroxypropyl-pentamethylammoniumdiethylendiamin, 2-Hydroxypropyl-pentamethylammoniumdipropylendiamin und/oder 2-Hydroxypropyl-pentamethylammoniumdihexamethylendiamin.

Als Carbonsäuren kommen neben Ameisensäure solche mit gerad- oder vezweigtkettigen Alkylresten mit 1 bis 19 Kohlenstoffatomen, vorzugsweise 6 bis 8 Kohlenstoffatomen in Betracht. Beispielhaft genannt seien Essig-, Propion-, 2,2-Dimethylpropion-, Butter-, n- und iso-Hexan-, n- und iso-Heptan-, n- und iso-Octan-, n- und iso-Decan-, n- und iso-Hexadecan-, 2-Ethylhexan- und 2-Ethyloctansäure. Vorzugsweise Anwendung finden Ameisensäure, Essigsäure und insbesondere 2-Ethylhexansäure.

Zur Herstellung der Polyurethan-polyisocyanurat-schaumstoffe werden die erfindungsgemäßen Ammoniumdiaminsalze als Katalysatoren in Mengen von 0,01 bis 5,0 Gew.-%, vorzugsweise 0,2 bis 2 Gew.-%, bezogen auf das Gesamtgewicht von Polyolen und Polyisocyanaten eingesetzt.

Die Polyurethan-polyisocyanurat-schaumstoffe können nach bekannten Verfahren aus üblichen Aufbaukomponenten, wie z. B. Polyolen, organischen Polyisocyanaten, Treibmitteln und gegebenenfalls Vernetzungsmitteln, Hilfs- und Zusatzstoffen hergestellt werden.

Als Polyole kommen beispielsweise Polyesterole und vorzugsweise Polyetherole in Betracht. Verwendet werden können jedoch auch andere Hydroxylgruppen gebunden enthaltende Polymere mit Molekulargewichten von 200 bis 6 000, beispielsweise Polyacetale, wie Polyoxymethylene und Butandiolformale, Polyesteramide und Polycarbonate, insbesondere solche hergestellt durch Umesterung von Diphenylcarbonat mit Hexandiol-1,6.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen und mehrwertigen Alkoholen, hergestellt werden. Genannt seien beispielhaft aliphatische Dicarbonsäuren, wie Glutarsäure, Pimelinsäure, Korksäure, Acelainsäure, Sebacinsäure, Undecandisäure und vorzugsweise Bernstein- und Adipinsäure und aromatische Dicarbonsäuren, wie Phthalsäure, Terephthalsäure sowie Tetrahydrophthalsäure. Beispiele für zwei- und mehrwertige Alkohole sind: Ethylenglykol, Diethylenglykol, 1,2- bzw. 1,3-Propylenglykol, Dipropylenglykol, Butandiol-1,4, Hexandiol-1,6, Decandiol-1,10, Neopentylglykol, Trimethylolpropan und Glycerin. Vorzugsweise verwendet werden Ethylenglykol, Propylenglykol und Glycerin.

Die Polyesterole, die Molekulargewichte von 200 bis 4 000, vorzugsweise von 300 bis 1 500 und OH-Zahl von 40 bis 880, vorzugsweise von 150 bis 600 besitzen, können einzeln oder als Gemische zur Anwendung kommen.

Die Polyetherole werden nach bekannten Verfahren aus einem oder mehreren Alkylenoxiden mit 2 bis 4 Kohlenstoffatomen im Alkylenrest und einem Startermolekül, das 2 bis 8 aktive Wasserstoffatome gebunden enthält, hergestellt. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernstein-, Adipin-, Phthal- und Terephthalsäure, gegebenenfalls mono- und dialkylsubstituierte Diamine mit 1 bis 4 Kohlenstoffatomen im Alkylrest, wie Ethylendiamin, 1,2- bzw. 1,3-Propylendiamin, 1,4-Butylendiamin, 1,6-Hexamethylendiamin, 4,4', 2,4'- und 2,2'-Diaminodiphenylmethan, Triamine, wie Diethylentriamin,

gegebenenfalls alkylsubstituierte Dialkanolamine mit 1 bis 4 Kohlenstoffatomen im Alkylrest, wie Diethanolamin, Diisopropanolamin, N-Methyl- und N-Ethyl-diethanolamin ; Trialkanolamine, wie Triethanolamin und Triisopropanolamin und vorzugsweise mehrwertige Alkohole, wie Ethylenglykol, 1,2- bzw. 1,3-Propylenglykol, Diethylenglykol, Dipropylenglykol, Butylenglykol-1,4, Hexamethylenglykol-1,6, Glycerin, Trimethylolpropan, Trimethylolethan, Pentaerythrit, Sorbit und Saccharose. Vorzugsweise verwendet werden Ethylenglykol, Propylenglykole, Glycerin, Sorbit und Saccharose. Die Polyetherole, die Molekulargewichte von 200 bis 1 500, vorzugsweise von 300 bis 500 und OH-Zahlen von 100 bis 800, vorzugsweise von 250 bis 500 besitzen, können ebenfalls einzeln oder als Mischungen untereinander eingesetzt werden.

Gegebenenfalls kann es zweckmäßig sein, neben den Polyolen zusätzlich Vernetzungsmittel zur Herstellung der Polyurethan-polyisocyanurat-schaumstoffe mitzuverwenden. Als Vernetzungsmittel kommen polyfunktionelle, insbesondere di- bis tetrafunktionelle Verbindungen mit Molekulargewichten von 18 bis kleiner 600, vorzugsweise von 60 bis 400 in Betracht. Geeignet sind beispielsweise zwei- und/oder dreiwertige Alkohole, wie Ethylenglykol, Propylenglykol, Butylenglykol-1,4, Hexamethylenglykol-1,6, Glycerin, Di-(β-hydroxyethyl)-hydrochinon, Diamine, wie Ethylendiamin, 3,3'-Di- bzw. 3,3',5,5'-Tretaalkylsubstituierte-4,4'-diamino-diphenylmethane mit 1 bis 4 Kohlenstoffatomen im Alkylrest, 3,3'-Dichlor-4,4'-diaminodiphenylmethan und Alkanolamine, wie Diethanolamin und Triethanolamin.

Zur Herstellung der Polyurethan-polyisocyanurat-schaumstoffe sind organische Polyisocyanate der Formel $R'(NCO)_p$ geeignet, worin R' einen mehrwertigen aliphatischen, alkylaromatischen oder aromatischen organischen Rest oder gemischte Reste dieser Art und p eine ganze Zahl bedeuten, deren Wert der Valenzzahl von R' entspricht und wenigstens zwei beträgt. Zu typischen organischen Polyisocyanaten gehören beispielsweise aromatische Polyisocyanate, wie 2,4- und 2,6-Toluylendiisocyanat, 2,2'-, 2,4'-, 4,4'-Diphenylmethan-diisocyanat, Triphenylmethan-triisocyanate, Biphenyl-diisocyanate, m- oder p-Phenylen-diisocyanat und 1,5-Naphthylen-diisocyanat und aliphatische Polyisocyanate, wie Isophorondiisocyanat und Hexamethylendiisocyanat. Vorzugsweise verwendet man die rohen und reinen Toluylendiisocyanate und Mischungen aus 2,2'-, 2,4'- und 4,4'-Diphenylmethan-diisocyanat und Polyphenylpolymethylen-polyisocyanaten (roh-MDI). Die Polyisocyanate können einzeln oder als Gemische zur Anwendung kommen.

Zur Herstellung der Polyurethan-polyisocyanurat-schaumstoffe werden die Polyisocyanate und Polyole sowie gegebenenfalls Vernetzungsmittel in solchen Mengenverhältnissen zur Reaktion gebracht, daß pro Hydroxylgruppe oder Summe aus Hydroxylgruppe und anderen Zerewitinoff-aktiven Wasserstoffatomen 1,7 bis 10, vorzugsweise 2 bis 5 NCO-Gruppen in der Reaktionsmischung vorliegen.

Zu Treibmitteln, welche beim erfindungsgemäßen Verfahren verwendet werden können, gehöhrt Wasser, dass mit Isocyanatgruppen unter Bildung von Kohlendioxid reagiert. Die Wassermengen, die zweckmäßigerweise verwendet werden können, betragen 0,2 bis 4 Gewichtsprozent, vorzugsweise 1 bis 3 Gew.-%, bezogen auf das Gewicht der Polyole.

Andere verwendbare Treibmittel, die vorzugsweise verwendet werden, sind niedrigsiedende Flüssigkeiten, die unter dem Einfluß der exothermen Polymerisations- bzw. Polyadditionsreaktion verdampfen.

Geeignet sind Flüssigkeiten, welche gegenüber dem organischen Polyisocyanat inert sind und Siedepunkte von nicht über 100 °C bei Atmosphärendruck, vorzugsweise zwischen − 40 und + 50 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Schaumstoffe hängt von der Schaumdichte, die man erreichen will, sowie gegebenenfalls von der Mitverwendung von Wasser ab. Im allgemeinen liefern Mengen von 5 bis 40 Gew.-%, bezogen auf Polyol, zufriedenstellende Ergebnisse.

Anwendung finden können auch Hilfs- und Zusatzstoffe. Genannt seien beispielsweise oberflächenaktive Substanzen, Weichmacher, Flammschutzmittel, Hydrolyseschutzmittel, fungistatisch und bakteriostatisch wirkende Substanzen, Farbstoffe, Pigmente und Füllstoffe.

Verwendet werden können beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Gennant seien beispielhaft Siloxan-Oxyalkylen-Mischpolymerisate und andere Organopolysiloxane, oxethylierte Alkylphenole, oxyethylierte Fettalkohole, Paraffinöle, Rizinusöl- bzw. Rizinolsäureester und Türkischrotöl, die in Mengen von 0,2 bis 6 Gewichtsteilen pro 100 Gewichtsteile Polyol angewendet werden.

Es kann auch vorteilhaft sein, einen Weichmacher in das Reaktionsgemisch einzubeziehen, so daß die Neigung zur Sprödigkeit in den Produkten verringert wird. Es können übliche Weichmachungsmittel verwendet werden, doch ist es besonders zweckmäßig, solche Mittel zu verwenden, die Phosphor und/oder Halogenatome enthalten und dadurch die Flammfestigkeit der Polyurethan-polyisocyanurat-schaumstoffe zusätzlich vergrößern. Zu solchen Mitteln gehören Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Antimontrioxid, Arsenoxid, Ammoniumphosphat und Calciumsulfat zum Flammfestmachen der Polyurethan-polyisocyanuratschaumstoffe verwendet werden. Im allgemeinen hat es sich als vorteilhaft erwiesen, 5 bis 50 Gewichtsteile, vorzugsweise 5 bis 25 Gewichtsteile der genannten Flammschutzmittel für jeweils 100 Gewichtsteile Polyisocyanat und Polyol zu verwenden.

Nähere Angaben über die obengenannten anderen üblichen Hilfs- und Zusatzstoffe sind der Fachliteratur, beispielsweise der Monographie von J. H. Saunders und K. C. Frisch « High Polymers », Band XVI, Polyurethanes, Teil 1 und 2, Verlag Interscience Publishers, 1962 bzw. 1864 zu entnehmen.

Die Polyurethan-polyisocyanurat-schaumstoffe werden nach dem Präpolymer- und vorzugsweise dem one shot-Verfahren hergestellt. Hierzu mischt man die Polyole bzw. -gemische mit den Polyisocyanaten, Katalysatoren, Treibmitteln und gegebenenfalls Vernetzungsmitteln, Hilfs- und Zusatzstoffen in den genannten Mengenverhältnissen intensiv bei Temperaturen von 10 bis 60 °C, vorzugsweise 15 bis 40 °C und läßt danach die Reaktionsmischung aufschäumen.

Die Polyurethan-polyisocyanurat-schaumstoffe besitzen Dichten von 20 bis 100 g/Liter, vorzugsweise 30 bis 60 g/Liter und zeichnen sich durch ihre mechanischen und thermischen Eigenschaften sowie die gute Flammbeständigkeit aus. Die Produkte werden vorzugsweise verwendet als Isoliermaterialien, insbesonders im Bausektor.

Die in den Beispielen genannten Teile beziehen sich auf das Gewicht.

Herstellung der erfindungsgemäß verwendbaren Ammoniumdiaminsalze

### Beispiel 1

In einem 3-l Vierhalskolben, der mit einem Rührer, Rückflußkühler und Tropftrichter ausgerüstet war, legte man eine Mischung aus 432 g 2-Ethylhexansäure und 519 g Pentamethyldiethylentriamin vor. Hierzu fügte man bei 25 °C 174 g Propylenoxid. Nach beendeter Propylenoxidzugabe rührte man die Mischunge zur Vervollständigung der Reaktion bei 100 °C 2 Stunden. Danach destillierte man die flüchtigen Bestandteile unter einem Druck von 0,01 bar bei 100 °C ab.

Als Rückstand erhielt man 1061 g N-2-Hydroxypropyl-pentamethylammoniumdiethylen-diamin-2-ethylhexanoat, im folgenden abgekürzt als PMDETA.

### Beispiele 2 und 3

Man verfuhr analog den Angaben von Beispiel 1, verwendete jedoch anstelle von Pentamethyldiethylentriamin 603 g Pentamethyl-dipropylentriamin oder 1 378 g Pentamethyl-dihexamethylentriamin. Als Rückstand erhielt man 1 130 g N-2-Hydroxypropyl-pentamethylammonium-dipropylendiamin-2-ethylhexanoat (abgekürzt: PMDPTA) bzw. 2 100 g N-2-Hydroxypropyl-pentamethylammonium-dihexamethylendiamin-2-ethylhexanoat (abgekürzt PMDHTA).

Herstellung von Polyurethan-polyisocyanurat-schaumstoffen :

### Beispiele 4 bis 6 und Vergleichsbeispiele I bis III

Komponente A : Mischung aus

50 Teilen eines Polyetherols auf Basis Sucrose, Glycerin und Wasser als Startermoleküle und Propylenoxid mit einer OH-Zahl von 390,
4,5 Teilen Ricinusöl,
2,1 Teilen Glycerin,
13,3 Teilen Tris-(β-chlorethyl)-phosphat,
0,5 Teilen Schaumstabilisator auf Polyether-polysiloxanbasis (Stabilisator OS 710 der Bayer AG),
11 Teilen Trichlorfluormethan und
3,3 Teilen Katalysator

Komponente B : Mischung aus

90 Teilen eines Prepolymeren, das hergestellt wurde aus 84 Teilen einer Mischung aus Diphenylmethan-diisocyanaten und Polyphenyl-polymethylen-polyisocyanaten und 6 Teilen des obengenannten Polyetherpolyols mit einer OH-Zahl von 390, und
9 Teilen Trichlorfluormethan.

34 g der Komponente A und 100 g der Komponente B wurden 10 Sekunden lang gut durchmischt, die schäumfähige Reaktionsmischung wurde in einen Pappbecher gegossen und aufschäumen gelassen.

Mit einem Gerät der Firma Fluidyne Model 121 wurde nach ASTM-D 1546-62 die Schaumhöhe, die proportional zum sper. Volumen ist, und die Schäumgeschwindigkeit [sper. Vol./sec.] in Abhängigkeit von der Zeit registriert und die Abbindezeit X gemessen. Das Raumgewicht der erhaltenen Polyurethan-polyisocyanurat-schaumstoffe betrug 50 [g/l].

Als Katalysatoren verwendet wurden 0,83 Gew.-%, bezogen auf das Gesamtgewicht von Polyisocyanat und Polyol, der in Tabelle 1 genannten Verbindungen.

In Tabelle 1 werden ferner die gemessenen Start- ($t_1$), Steig- ($t_2$) und Abbindezeiten (X) und die Anzahl der Schäumgeschwindigkeitsmaxima genannt.

Die Namen der als Vergleichssubstanzen verwendeten Katalysatoren werden in den Tabellen folgendermaßen abgekürzt:

TMR: N-2-Hydroxypropyl-trimethylammonium-2-ethylhexanoat
TMR-2: N-2-Hydroxypropyl-trimethylammonium-formiat
KF: Kaliumformiat; 35 gew.-%ige Lösung in Ethylenglykol
HHT: Tris-(dimethylaminopropyl)-s-hexahydrotriazin
TEA: Triethylamin

Tabelle 1

Polyurethan-polyisocyanurat-schaumstoffe (Raumgewicht: 50 g/l)

| Beispiel | Vergleichsbeispiel | Katalysator | Startzeit $t_1$ [sec] | Steigzeit $t_2$ [sec] | Abbindezeit (X) [sec] | Geschwindigkeitsmaxima |
|---|---|---|---|---|---|---|
| 4 | - | PMDETA | 50 | 230 | 220 | 1 (Fig. 2) |
| 5 | - | PMDPTA | 55 | 230 | 260 | 1 |
| 6 | - | PMDHTA | 50 | 260 | 290 | 1 |
| - | I | TMR | 40 | 145 | 130 | 2 (Fig. 1) |
| - | II | KF | 50 | 212 | 220 | 2 |
| - | III | HHT:KF = 1:2 | 25 | 157 | 125 | 2 |

Beispiele 7 bis 9 und Vergleichsbeispiele IV und V

Komponente A: Mischung aus

80 Teilen eines Polyetherols auf Basis von Sucrose, Glycerin und Wasser als Statermolekül und Propylenoxid mit einer OH-Zahl von 390,
20 Teilen eines Polyetherols auf Basis von Tetrabromphthalsäure-Glycerin als Startermoleküle und Propylenoxid mit einer OH-Zahl von 310,
2 Teilen eines Schaumstabilisators auf Silikonbasis (DC 193 der Firma DOW Corning),
55 Teilen Trichlorfluormethan und
18 Teilen Tris(β-chlorpropyl)-phosphat

Komponente B: Mischung aus Diphenylmethan-diisocyanaten und Polyphenyl-polymethylen-polyisocyanaten (roh-MDI)

76 Teile der Komponente A und 100 Teile der Komponente B wurden 10 Sekunden lang intensiv durchmischt. Die schaumfähige Reaktionsmischung wurde danach in einen Pappbecher gegossen und aufschäumen gelassen.

Analog den Beispielen 4 bis 6 wurden die technischen Daten bestimmt.

Die Art und Mengen (die Gew.-% sind bezogen auf das Gesamtgewicht von Polyol und Polyisocyanat) der verwendeten Katalysatoren sowie die erhaltenen technischen Daten sind in Tabelle 2 zusammengefaßt.

(Siehe Tabelle 2 Seite 7 f.)

Tabelle 2

Polyurethan-polyisocyanurat-schaumstoffe (Raumgewicht : 35 [g/l]

| Beispiele | Vergleichsbeispiele | Katalysator Art | Katalysator Menge [Gew.-%] | Startzeit $t_1$ [sec] | Steigzeit $t_2$ [sec] | Abbindezeit (X) [sec] | Geschwindigkeitsmaxima |
|---|---|---|---|---|---|---|---|
| 7 | - | PMDETA | 0,5 | 50 | 222 | 160 | 1 |
| 8 | - | PMDPTA | 0,5 | 72 | 348 | 225 | 1 |
| 9 | - | PMDHTA | 0,5 | 80 | 420 | 250 | 1 |
| - | IV | TMR-2 | 0,15 | | | | |
| | | KF | 0,30 | 145 | 185 | 220 | 2 |
| | | TEA | 0,06 | | | | |
| - | V | TMR | 0,5 | 50 | 190 | 147 | 2 |

**Patentansprüche**

1. Verfahren zur Herstellung von Polyurethan-polyisocyanurat-schaumstoffen durch Umsetzung von organischen Polyisocyanaten mit Polyolen in Gegenwart von Katalysatoren, Treibmitteln und gegebenenfalls Vernetzungsmitteln, Hilfs- und Zusatzstoffen, dadurch gekennzeichnet, daß man als Katalysatoren Salze von Ammoniumdiaminen der Formel

$$[CH_3 - \underset{CH_2CH(OH)CH_3}{\overset{CH_3}{N^+}} - (CH_2)_n - \overset{CH_3}{N} - (CH_2)_m - \overset{CH_3}{N} - CH_3]\ RCOO^-$$

verwendet, in der bedeuten :

R ein Wasserstoffatom oder einen gerad- oder verzweigtkettigen Alkylrest mit 1 bis 19 Kohlenstoffatomen und

n und m ganze Zahlen von 2 bis 10, welche gleich oder verschieden sind.

2. Verfahren nach Anspruch 1, dadurch gekennzeichnet, daß man die Salze der Ammoniumdiamine in Mengen von 0,01 bis 5 Gew.-%, bezogen auf das Gesamtgewicht der organischen Polyisocyanate und Polyole, einsetzt.

3. Verfahren nach Anspruch 1, dadurch gekennzeichnet, daß man als Ammoniumdiamine 2-Hydroxypropyl-pentamethylammoniumdiethylendiamin, 2-Hydroxypropyl-pentamethylammoniumdipropylendiamin oder 2-Hydroxypropylpentamethylammoniumdihexamethylendiamin verwendet.

4. Verfahren nach Anspruch 1, dadurch gekennzeichnet, daß man als $RCOO^-$ das Anion der 2-Ethylhexansäure verwendet.

5. Verfahren nach Anspruch 1, dadurch gekennzeichnet, daß das Verhältnis von NCO : OH-Gruppen oder der Summe aus OH-Gruppen und anderen Zerewitinoff aktiven Wasserstoffatomen 2 bis 5 beträgt.

**Claims**

1. A process for the preparation of polyurethane-polyisocyanurate foams by reacting organic polyisocyanates with polyols in the presence of catalysts, blowing agents and optional cross-linking agents, auxiliaries and additives, wherein the catalysts used are salts of ammonium diamines of the formula

$$[CH_3 - \underset{CH_2CH(OH)CH_3}{\overset{CH_3}{N^+}} - (CH_2)_n - \overset{CH_3}{N} - (CH_2)_m - \overset{CH_3}{N} - CH_3]\ RCOO^-$$

where

R is hydrogen or linear or branched alkyl of 1 to 19 carbon atoms, and

n and m are identical or different integers from 2 to 10.

2. A process as claimed in claim 1, wherein the salts of the ammonium diamines are used in quantities of from 0.01 to 5 percent by weight, based on the total weight of the organic polyisocyanates and polyols.

3. A process as claimed in claim 1, wherein 2-hydroxypropylpentamethylammonium diethylenediamine, 2-hydroxypropyl-pentamethylammonium dihexamethylenediamine is used as the ammonium diamine.

4. A process as claimed in claim 1,wherein the anion of 2-ethylhexanoic acid is used as $RCOO^-$.

5. A process as claimed in claim 1, wherein the ratio of isocyanate groups to hydroxyl groups or the sum of hydroxyl groups and other hydrogen atoms capable of undergoing a Zerewitinoff reaction is 2 to 5.

**Revendications**

1. Procédé de préparation de mousses de polyuréthannepolyisocyanurate par réaction de polyisocyanates organiques et de polyols en présence de catalyseurs et d'agents porogènes et éventuellement d'agents de réticulation, d'additifs et d'adjuvants, caractérisé en ce que l'on emploie comme catalyseurs des sels de diamines d'ammonium de la formule

$$[CH_3 - \underset{CH_2CH(OH)CH_3}{\overset{CH_3}{N^+}} - (CH_2)_n - \overset{CH_3}{N} - (CH_2)_m - \overset{CH_3}{N} - CH_3]\ RCOO^-$$

dans laquelle

R désigne un atome d'hydrogène ou un radical alkyle en $C_1$ à $C_{19}$ à chaîne droite ou ramifiée et n et m sont des nombres entiers identiques ou différents, valant de 2 à 10.

2. Procédé suivant la revendication 1, caractérisé en ce que les sels de diamines d'ammonium sont mis en œuvre en des proportions comprises entre 0,01 et 5 % du poids total des polyisocyanates organiques et des polyols.

3. Procédé suivant la revendication 1, caractérisé en ce que la diamine d'ammonium est choisie parmi la diéthylène-diamine de 2-hydroxypropyl-pentaméthylammonium, la dipropylène-diamine de 2-hydroxypropylpentaméthyl-ammonium et la dihexaméthylène-diamine de 2-hydroxypropyl-pentaméthylammonium.

4. Procédé suivant la revendication 1, caractérisé en ce que le groupe $RCOO^-$ est l'anion de l'acide éthyl-2 hexanoïque.

5. Procédé suivant la revendication 1, caractérisé en ce que le rapport des groupes NCO— aux groupes OH ou à la somme des groupes OH et d'autres atomes d'hydrogène actifs selon Zerewitinov est compris entre 2 et 5.

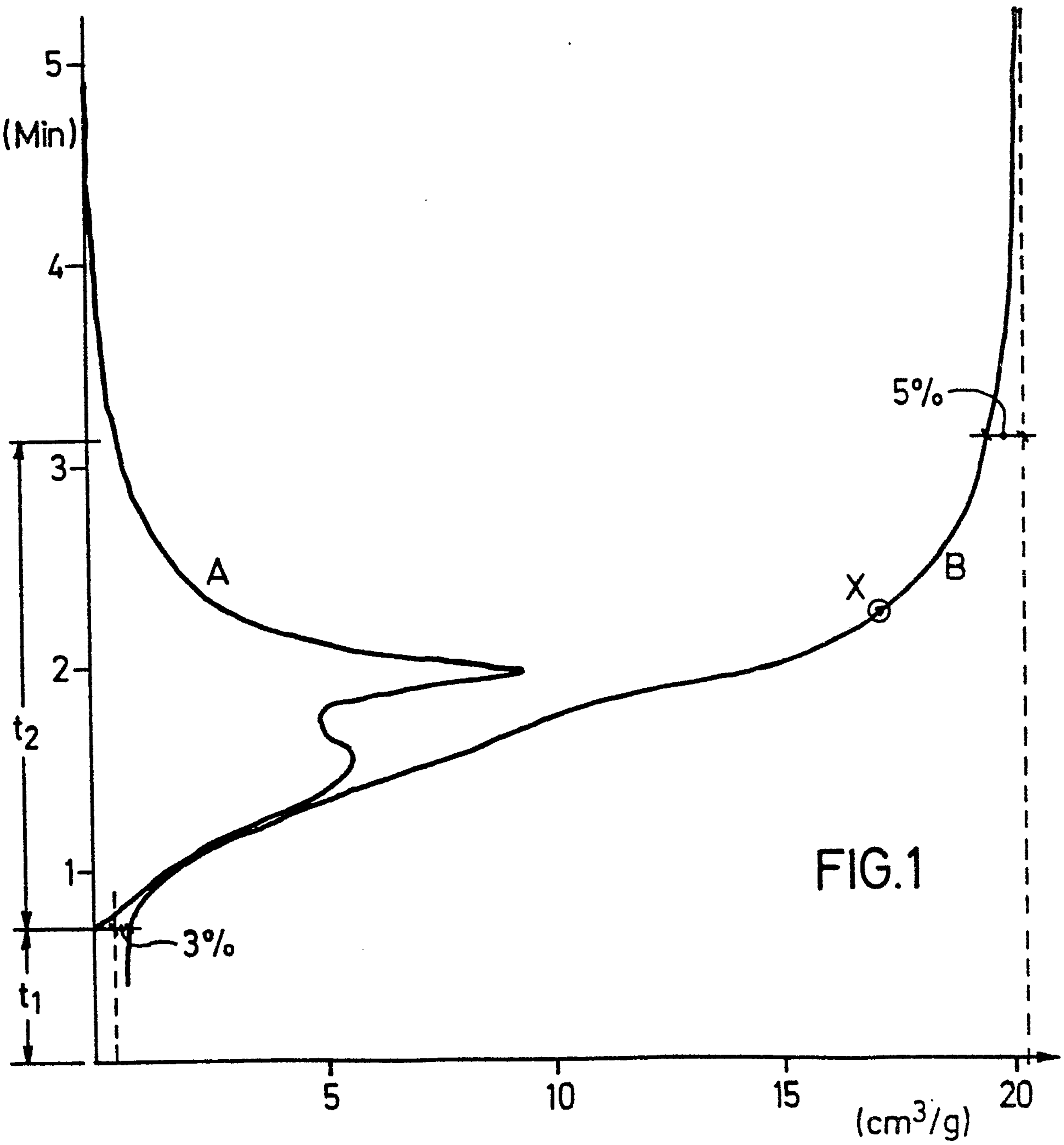


FIG.1

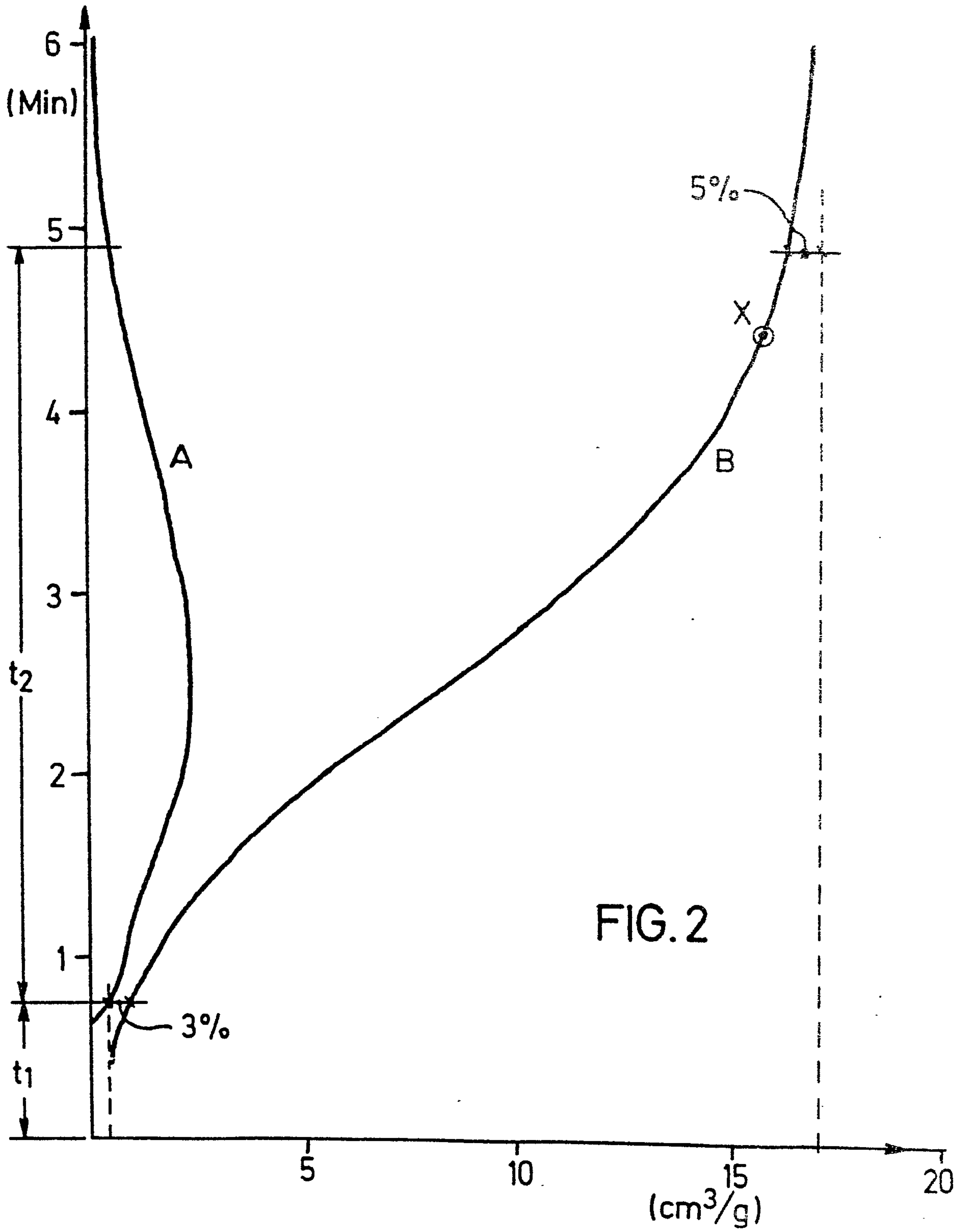


FIG. 2